# EUROPÄISCHE PATENTANMELDUNG

(11) **EP 0 541 514 A2**
(43) Veröffentlichungstag der Anmeldung: **12.05.1993**
(21) Anmeldenummer: 93101790.9
(22) Anmeldetag: 12.03.1987
(51) Int. Cl.: G06K 19/12, G07F 7/02, G07F 7/08

(54) **Verfahren zur Fälschungssicherung eines Datenträgers und fälschungsgesicherter Datenträger**

(30) Priorität: 12.03.1986 AT 644/86; 12.03.1986 AT 645/86; 12.03.1986 AT 646/86; 12.03.1986 AT 647/86; 12.03.1986 AT 648/86
(62) Teilanmeldung aus: 87902023.8
(71) Anmelder: SKIDATA COMPUTERHANDELSGESELLSCHAFT M.B.H., A-5083 Gartenau (AT)
(72) Erfinder: Kocznar, Wolfram, A-6020 Innsbruck (AT); Wallerstorfer, Kurt, A-5204 Strasswalchen (AT)
(74) Vertreter: Torggler, Paul, Dr.

(57) **Zusammenfassung**

Bei einem kartenförmigen Datenträger, dessen Daten in eine Magnetschicht eingeschrieben sind, weist die Magnetschicht inhomogen verteilte magnetisierbare Teile mit identischen magnetischen Eigenschaften auf. Zur Sicherung gegen eine Fälschung wird die Magnetschicht zuerst mit einem magnetischen Gleichfeld beaufschlagt. Dann wird die Magnetschicht gelesen, wobei als physische Echtheitsmerkmale die durch die inhomogene Verteilung der magnetisierbaren Teile induzierten Signale ausgewertet werden. Die Magnetschicht umfaßt hiezu zumindest zwei übereinanderliegende Filme (12'a, 12'b). In zumindest einem Film (12'a) sind die Inhomogenitäten bewirkende Unterbrechungen (13) vorgesehen.

## Beschreibung

Die Erfindung betrifft ein Verfahren zur Fälschungssicherung eines insbesondere kartenförmigen Datenträgers, dessen Daten in eine Magnetschicht eingeschrieben sind, die magnetisierbare Teile enthält, wobei physische Echtheitsmerkmale des Datenträgers ausgewertet werden, sowie einen fälschungssicheren Datenträger mit physischen Echtheitsmerkmalen in Form von Inhomogenitäten einer Magnetschicht zur Verwendung in diesem Verfahren.

Als Datenträger werden in der Regel Magnetkarten verwendet. Um diese Magnetkarten gegen Verfälschungen zu sichern, verschlüsselt man meist die in einer Magnetspur abgelegten Daten auf mehr oder weniger komplizierte Weise. Dadurch kann zwar die Verfälschung bzw. Änderung der Daten auf der Magnetkarte weitgehend verhindert werden. Das eigentliche Problem der Fälschung einer Magnetkarte besteht jedoch darin, daß das Kopieren des Inhaltes eines wertvollen Datenträgers auf die Magnetspur eines Datenträgers mit geringem Wert durch diese Maßnahmen nicht verhindert werden kann. Um eine solche Fälschung zu verhindern, ist es notwendig, physische Echtheitsmerkmale des Datenträgers auszuwerten.

Für die Prüfung auf Echtheit von Datenträgern sind gemäß der DE-A 27 45 632 auf dem Datenträger zwei teilweise überlappende Magnetschichten aus Materialien mit unterschiedlichen Koerzitivkräften vorgesehen. Der Datenträger wird mit einem löschenden und einem magnetisierenden Feld beaufschlagt. Durch die unterschiedlichen Koerzitivkräfte weist der Datenträger charakterische Eigenschaften auf, die bei einer Echtheitsprüfung überprüft werden können.

Ein weiteres Verfahren für die Echtheitsprüfung beschreibt die US-A 42 18 674. In der Magnetschicht dieses Datenträgers sind magnetische Teilchen, beispielsweise Fasern in einer charakterischen, bekannten Verteilung. Soll die Echtheit überprüft werden, wird die Verteilung der magnetischen Teilchen ermittelt und mit der bekannten Verteilung verglichen.

Für den Zutritt zu Schwimmbädern, Seilbahnen etc. werden oftmals Punktekarten verwendet. Dabei ist es von Vorteil, wenn bei einem Zutritt die Entwertung der Berechtigungskarte bzw. die Anzahl der verbrauchten Punkte auf der Berechtigungskarte visuell lesbar gekennzeichnet wird. Damit erhält der Karteninhaber Informationen über den noch verbleibenden Punkterest und es werden etwaige Manipulationen erschwert.

Die Erfindung hat es sich nun zur Aufgabe gestellt, ein derartiges Verfahren zu vereinfachen und einen geeigneten, möglichst fälschungssicheren Datenträger zu schaffen.

Erfindungsgemäß wird dies dadurch erreicht, daß in einem ersten Schritt die Magnetschicht mit einem magnetischen Gleichfeld beaufschlagt wird und daß in einem zweiten Schritt die Magnetschicht gelesen wird, wobei die durch eine inhomogene Verteilung der magnetisierbaren Teile induzierten Signale als Echtheitsmerkmale ausgewertet werden.

Eine inhomogene Verteilung von magnetisierbaren Teilen kann gegenüber mechanischen Beanspruchungen relativ leicht geschützt werden, während Verschmutzungen keine Beeinträchtigung der Auswertsicherheit mit sich bringen.

Vorteilhaft werden als Echtheitsmerkmale Dickenschwankungen der Magnetschicht ausgewertet.

Ein Datenträger zur Durchführung des erfindungsgemäßen Verfahrens zeichnet sich dadurch aus, daß die Magnetschicht zumindest zwei übereinanderliegende Filme mit im wesentlichen identischen magnetischen Eigenschaften umfaßt, und daß an zumindest einem Film die Inhomogenitäten vorgesehen sind. Die Inhomogenitäten werden beispielsweise durch Dickenschwankungen, Unterbrechungen magnetisch inaktiver Pigmente bzw. Körper, usw. gebildet.

In jedem Fall ist es günstig, wenn die Magnetschicht von einem gefärbten Film abgedeckt ist.

Eine weitere bevorzugte Ausführung sieht vor, daß die Magnetschicht auf der einen Seite des Datenträgers angeordnet ist, und dessen andere Seite eine insbesondere für flüssige Tinte saugfähige Beschichtung zur Aufnahme einer optisch lesbaren Kennzeichnung aufweist. Hiedurch wird vor allem die visuelle und maschinelle Lesbarkeit des Datenträgers auch unter erschwerten Umweltbedingungen verbessert.

Eine weitere bevorzugte Ausführung sieht vor, daß die Magnetschicht in Form von zwei parallel zu einem Rand des kartenförmigen Datenträgers und außerhalb dessen Symmetrieachse verlaufenden Magnetstreifen ausgebildet ist.

Die Erfindung wird nachfolgend anhand eines Anwendungsbeispieles in einem System zur Kontrolle und Kennzeichnung von Wertkarten erläutert. Die Erfindung kann auch in beliebigen anderen Systemen, beispielsweise bei der Zutrittskontrolle, bei der Warenerfassung, etc. angewendet werden, wie auch einzelne Komponenten des Systems geändert werden können.

Es zeigen:
- Fig. 1: die Draufsicht auf einen als Wertkarte ausgebildeten Datenträger mit einem Befestigungsklips,
- Fig. 2 bis 4: den Aufbau der Wertkarte,
- Fig. 5: ein Ausführungsbeispiel einer Wertkarte mit einer Klebelasche zur Befestigung eines Fotos,
- Fig. 6: den Schichtenaufbau der Klebelasche,
- Fig. 7: die Komponenten eines Systems zur Kennzeichnung und Lesung bzw. Entwertung einer Wertkarte.

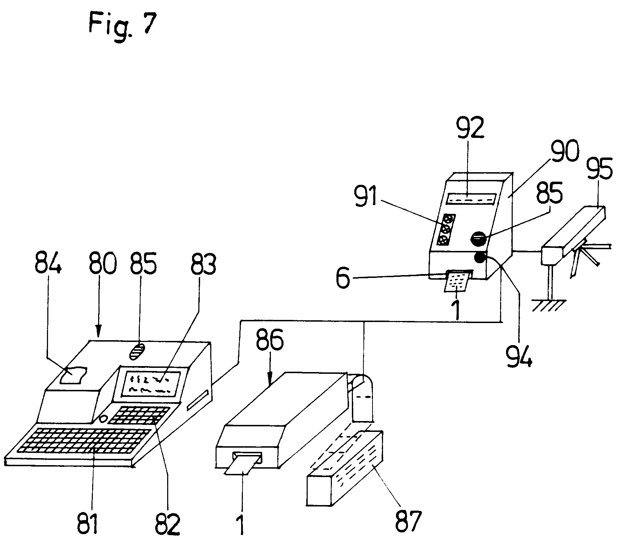

Wie in der Fig. 7 dargestellt ist, werden die als Wertkarten ausgebildeten Datenträger 1 mittels eines Ausgabegerätes 86 ausgestellt. Dieses Gerät zieht die Karten von einem Kartenvorrat 87 ein, beschriftet sie visuell lesbar und schreibt die Stamminformation, beispielsweise den Wert der Karte, die Anzahl der erlaubten Zutritte etc. maschinenlesbar in einem Magnetstreifen ein. Anschließend werden die Karten ausgeworfen. Dieses Kartenausstellgerät 86 wird über einen Ausgaberechner 80 gesteuert. Der Ausgaberechner 80 weist eine alphanumerische Tastatur 81 und eine Funktionstastatur 82 auf. Über diese Tasten können die gewünschten Stamminformationen eingegeben werden. Die Eingaben und die jeweiligen Operationen werden über ein Display 83 angezeigt. Weiters enthält der Ausgaberechner 80 einen Bon- und einen Journalstreifendrucker 84. Zur Kontrolle bzw. Entwertung der Datenträger 1 ist an den jeweiligen Stellen eine Kartenkontrollvorrichtung 90 vorgesehen.

Diese Kartenkontrollvorrichtung 90 weist ein Mundstück 6 zum Einführen des Datenträgers 1 auf. Nach dem Einführen des Datenträgers 1 wird die Stamminformation derselben magnetisch gelesen und abhängig vom jeweiligen Typ der Karte bzw. der jeweiligen Berechtigung, beispielsweise ein Drehkreuz 95 freigegeben. Zugleich wird die Karte entwertet, die konsumierte Leistung visuell lesbar aufgedruckt und wieder ausgegeben. Zur Kommunikation mit dem Karteninhaber weist die Kartenkontrollvorrichtung 90 noch eine Ampel 91, sowie ein Display 92 auf. Über letzteres können beispielsweise Informationen bei Fehlbedienungen etc. gegeben werden.

Weiters sind die Kartenkontrollvorrichtung 90 und der Ausgaberechner 80 über eine Wechselsprechanlage 85 miteinander verbunden. Bei etwaigen Problemen kann der Kartenbenützer eine Ruftaste 94 drücken und so mit der Bedienungsperson in Kontakt treten. Die einzelnen Komponenten, insbesondere der Ausgaberechner 80 und die Kartenkontrollvorrichtung 90 können direkt miteinander elektrisch verbunden sein, es ist aber auch eine Funktion ohne direkte Verbindung möglich. Die hier dargestellte Anordnung ist lediglich ein einfaches Beispiel. In der Regel sind in einem derartigen System eine Vielzahl von Kartenkontrollvorrichtungen und mehrere Ausgabestellen vorhanden.

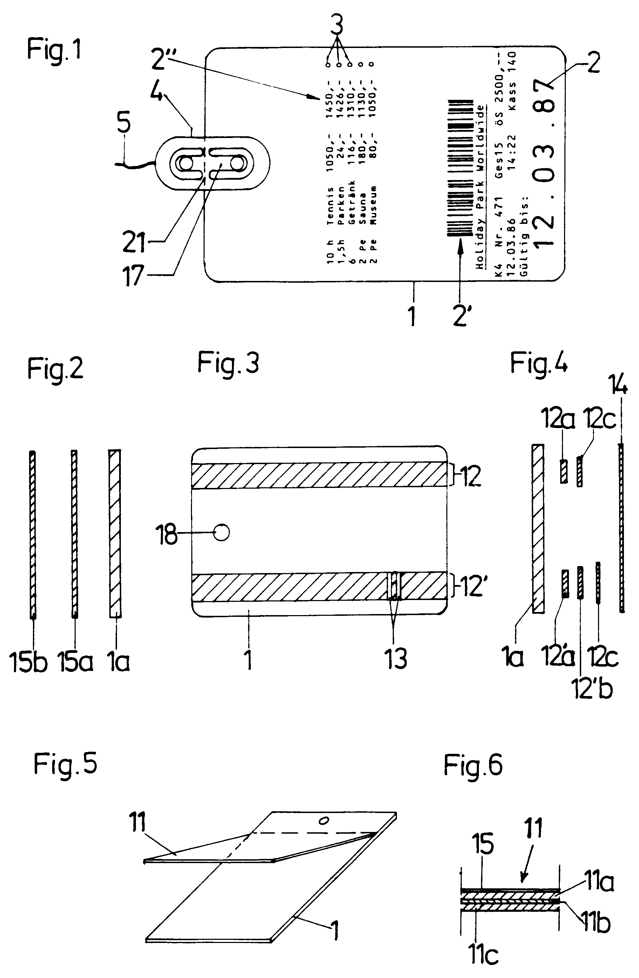

Die Figur 1 zeigt die Draufsicht auf eine Seite des als Wertkarte ausgebildeten Datenträgers 1. Diese Seite weist eine visuell lesbare Kennzeichnung 2 auf, in welcher die Stamminformationen enthalten sind. Diese Stamminformationen sind beispielsweise das Ablaufdatum der Berechtigungskarte, der Wert, Ausgabezeit, etc. Weiters sind diese Daten auch in Form eines visuell lesbaren Strichcodes 2' abgelegt. Bei der Benützung der Wertkarte werden die konsumierten Leistungen in der Kartenkontrollvorrichtung 90 visuell lesbar aufgedruckt. Dies ist in den Textzeilen 2'' dargestellt. Weiters wird jede Textzeile durch eine Prägung 3 zusätzlich gekennzeichnet. Dies hat den Vorteil, daß bei etwaigen Manipulationen der visuell lesbaren Kennzeichnung die Anzahl der Abbuchvorgänge einwandfrei nachgewiesen werden kann.

Der Datenträger 1 ist über einen Befestigungsklips 4 mit einer Schnur verbunden, welche wiederum beispielsweise an einem Kleidungsstück des Karteninhabers befestigt sein kann. Von Vorteil ist hier insbesondere, wenn die Schnur 5 in eine automatische Aufwickelvorrichtung mündet, sodaß die Karte im Normalfall sichtbar und direkt am Körper getragen wird. Bei der Benützung kann die Schnur 5 dann aus der nicht dargestellten Aufwickelvorrichtung ausgezogen werden und die Karte so in das Mundstück 6 der Kartenkontrollvorrichtung 90 eingeführt werden.

Die Figur 3 zeigt die der visuellen Kennzeichnung gegenüberliegende Seite des Datenträgers 1 und die Figuren 2 und 4 den Aufbau der beiden Seiten der Karte im schematischen Querschnitt. Der Datenträger 1 besteht aus einem Grundkörper 1a, der auf einer Seite mit einer saugfähigen Beschichtung 15 versehen ist. Als Grundkörper 1a eignen sich insbesondere Karton oder, wenn die Karte erhöhten Beanspruchungen ausgesetzt ist, Kunststoff bzw. Verbundmaterialien. Besteht der Kartengrundkörper aus Kunststoff, so ist es von Vorteil, wenn gemäß Fig. 2 die saugfähige Beschichtung 15 aus zwei Filmen 15a und 15b hergestellt ist. Der Film 15a dient dann insbesondere der Haftvermittlung, während der Film 15b auf gute Saugfähigkeit abgestellt sein kann.

Entsprechend Figur 4 befindet sich auf der zweiten Seite des Grundkörpers 1a ein Magnetstreifen 12, der aus einer Magnetschicht 12a besteht, welche von einer beispielsweise weiß eingefärbten Abdeckschicht 12c überdeckt ist. Die gesamte Kartenoberfläche kann beispielsweise von einem Schutzlack 14 überdeckt sein. Der Magnetstreifen 12 dient der Aufnahme einer maschinenlesbaren Kennzeichnung bzw. Codierung in bekannter Weise. Wenn die Menge der im Streifen 12 speicherbaren Daten nicht ausreicht, kann gegebenenfalls ein zweiter Magnetstreifen 12' vorgesehen sein.

An diesem zweiten Magnetstreifen 12' wird nachfolgend ein Beispiel zur Fälschungssicherung der Wertkarte erläutert. Selbstverständlich können die hier dargestellten Maßnahmen zur Fälschungssicherung an einem einzigen, zur Aufnahme der Daten bestimmten Magnetstreifen ausgebildet sein. Der Magnetstreifen 12' besteht aus einem ersten Film 12'a, welcher Unterbrechungen 13 aufweist. Dieser erste Film 12'a ist dann ganzflächig, also auch im Bereich der Unterbrechungen 13 von der eingefärbten Abdeckschicht 12c überdeckt. In der gezeigten Ausführung ist der unterbrochene Film, 12'a von einem zweiten Film 12'b mit einer Magnetschicht überdeckt. Auf dem zweiten Film 12'b ist wiederum eine inaktive Abdeckschicht 12c aufgebracht. Der so ausgebildete Magnetstreifen 12' weist dadurch im Bereich der Unterbrechungen 13 Inhomogenitäten in Form von Dickenschwankungen auf. Diese Inhomogenitäten sind visuell nicht sichtbar.

Die Inhomogenitäten können aber auch auf andere Weise, beispielsweise durch Beimischung von magnetisch inaktiven Körpern oder Pigmenten in die Magnetschicht erzeugt werden. Wird nun dieser Magnetstreifen 12' mit einem magnetischen Gleichfeld beaufschlagt und anschließend gelesen, so induzieren die durch die Unterbrechungen 13 bedingten Inhomogenitäten durch eine Änderung des magnetischen Flusses ein elektrisches Signal im Lesekopf, welches als Echtheitsmerkmal ausgewertet werden kann. Hiebei können beispielsweise die Anzahl der elektrischen Impulse und die Lage derselben relativ zu einem Fixpunkt der Karte ausgewertet werden. Auf diese Art erhält man ein physisches Echtheitsmerkmal der Karte, da beispielsweise die Anzahl und die Lage der Unterbrechungen 13 auf jeder Wertkarte individuell angeordnet werden können. Der Magnetstreifen 12' kann dabei aber ganz normal zur Datenspeicherung verwendet werden. Dieses Verfahren ist nicht auf das hier dargestellte Beispiel eingeschränkt. Wesentlich ist nur, daß nach der Beaufschlagung der Magnetschicht mit einem Gleichfeld bei der Lesung durch Inhomogenitäten bedingte, charakteristische Signale entstehen. Ein wesentlicher Vorteil ist auch, daß für die Echtheitserkennung keine gesonderten Vorrichtungen notwendig sind, und daß die Auswertung auch bei Verschmutzung der Karte oder Verschleiß einwandfrei möglich ist. Die Auswertung kann auch durch Aufbringen eines magnetischen Wechselfeldes erfolgen, wobei dann durch die Inhomogenitäten Signaländerungen entstehen.

In Figur 5 und 6 ist noch eine Variante des Datenträgers 1 dargestellt, welche beispielsweise durch Aufnahme eines Fotos einer bestimmten Person zugeordnet werden kann. Hiezu weist die Karte auf einer Seite eine Klebelasche 11 auf, welche nur in einem Teilbereich der Oberfläche mit dem Grundkörper 1a verbunden ist. Die Klebelasche 11 besteht gemäß Fig. 10 aus einer silikonisierten Abdeckfolie 11c, einem Klebstoffpolster 11b, einer transparenten Folie 11a und der außenliegenden, transparenten und saugfähigen Beschichtung 15. Zum Befestigen eines Fotos kann die Abdeckfolie 11c entfernt, das Foto eingelegt und die Klebelasche gegen den Grundkörper 1a gedrückt werden. Die Beschriftung ist auf der saugfähigen Beschichtung 15 sowohl vor als auch nach dem Einlegen des Fotos möglich.

## Patentansprüche

1. Verfahren zur Fälschungssicherung eines insbesondere kartenförmigen Datenträgers, dessen Daten in eine Magnetschicht eingeschrieben sind, die magnetisierbare Teile enthält, wobei physische Echtheitsmerkmale des Datenträgers ausgewertet werden, dadurch gekennzeichnet, daß in einem ersten Schritt die Magnetschicht mit einem magnetischen Gleichfeld beaufschlagt wird und daß in einem zweiten Schritt die Magnetschicht gelesen wird, wobei die durch eine inhomogene Verteilung der magnetisierbaren Teile induzierten Signale als Echtheitsmerkmale ausgewertet werden.

2. Verfahren nach Anspruch 1, dadurch gekennzeichnet, daß als Echtheitsmerkmale Dickenschwankungen der Magnetschicht ausgewertet werden.

3. Fälschungssicherer Datenträger mit physischen Echtheitsmerkmalen in Form von Inhomogenitäten einer Magnetschicht zur Verwendung im Verfahren nach Anspruch 1 oder 2, dadurch gekennzeichnet, daß die Magnetschicht zumindest zwei übereinanderliegende Filme (12'a, 12'b) mit im wesentlichen identischen magnetischen Eigenschaften umfaßt, und daß an zumindest einem Film (12'a) die Inhomogenitäten vorgesehen sind.

4. Datenträger nach Anspruch 3, dadurch gekennzeichnet, daß die Inhomogenitäten durch magnetisch inaktive Pigmente bzw. Körper gebildet sind.

5. Datenträger nach Anspruch 3, dadurch gekennzeichnet, daß die Inhomogenitäten durch Unterbrechungen (13) der Magnetschicht gebildet sind.

6. Datenträger nach einem der Ansprüche 3 bis 5, dadurch gekennzeichnet, daß die Magnetschicht von einem gefärbten Film (12c) abgedeckt ist.

7. Datenträger nach einem der Ansprüche 3 bis 6, dadurch gekennzeichnet, daß die Magnetschicht auf der einen Seite des Datenträgers (1) angeordnet ist, und dessen andere Seite eine insbesondere für flüssige Tinte saugfähige Beschichtung (15) zur Aufnahme einer optisch lesbaren Kennzeichnung aufweist.

8. Datenträger nach einem der Ansprüche 3 bis 7, dadurch gekennzeichnet, daß die Magnetschicht in Form von zwei parallel zu einem Rand des kartenförmigen Datenträgers (1) und außerhalb dessen Symmetrieachse verlaufenden Magnetstreifen (12, 12') ausgebildet ist.

9. Datenträger nach Anspruch 7, dadurch gekennzeichnet, daß die saugfähige Beschichtung (15) transparent und an der Oberfläche einer auf den Kartengrundkörper (1a) aufgeklebten, transparenten Klebefolie (11) aufgebracht ist.
